(19) Europäisches Patentamt
European Patent Office
Office européen des brevets

(11) **EP 4 418 124 A2**

(12) **EUROPEAN PATENT APPLICATION**

(43) Date of publication:
**21.08.2024 Bulletin 2024/34**

(21) Application number: **24157047.2**

(22) Date of filing: **12.02.2024**

(51) International Patent Classification (IPC):
***G06F 11/34*** (2006.01)

(52) Cooperative Patent Classification (CPC):
**G06F 11/3442;** G06F 11/3409; G06F 11/3466

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.02.2023 US 202363446733 P
24.03.2023 US 202318189990**

(71) Applicant: **Samsung Electronics Co., Ltd.
Suwon-si, Gyeonggi-do 16677 (KR)**

(72) Inventors:
• JALIMINCHE, Lokesh Nagappa
  San Jose, CA 95134 (US)
• KANG, Yangwook
  San Jose, CA 95134 (US)
• CHOI, Changho
  San Jose, CA 95134 (US)

(74) Representative: **Kuhnen & Wacker
Patent- und Rechtsanwaltsbüro PartG mbB
Prinz-Ludwig-Straße 40A
85354 Freising (DE)**

(54) **SYSTEM AND METHOD FOR IDENTIFYING KERNELS SUITABLE FOR COMPUTATIONAL STORAGE**

(57) A system and method for identifying kernels suitable for computational storage. In some embodiments, the method includes: identifying a kernel of a computation as a candidate for execution in a computational storage circuit (125); and evaluating the kernel as a candidate for execution in the computational storage circuit (125), the identifying including estimating a working set size of the kernel, and the evaluating including estimating an expected performance of the kernel in the computational storage circuit (125).

FIG. 1

## Description

### FIELD

One or more aspects of embodiments according to the present disclosure relate to computational storage, and more particularly to a system and method for managing computational storage identifying kernels suitable for computational storage.

### BACKGROUND

A computational storage device may include both data storage resources and computational resources. A computational storage device may be connected to a host also including computational resources. In operation, a computation may be performed in the host, or in the computational storage device, or it may be performed in part in the host and in part in the computational storage device.

It is with respect to this general technical environment that aspects of the present disclosure are related.

### SUMMARY

According to an embodiment of the present disclosure, there is provided a method, including: identifying a kernel of a computation as a candidate for execution in a computational storage circuit; and evaluating the kernel as a candidate for execution in the computational storage circuit, the identifying including estimating a working set size of the kernel, and the evaluating including estimating an expected performance of the kernel in the computational storage circuit.

In some embodiments, the estimating of the working set size of the kernel includes: performing a first test execution with a first quantity of available memory, and performing a second test execution with a second quantity of available memory, less than the first quantity.

In some embodiments, the estimating of the working set size of the kernel includes: performing a first test execution with a first quantity of available memory, and measuring execution performance of the first test execution.

In some embodiments, the identifying of the kernel as a candidate for execution in the computational storage circuit includes determining that the working set size of the kernel is less than a size of a buffer of the computational storage circuit.

In some embodiments, the identifying of the kernel as a candidate for execution in the computational storage circuit includes determining that the kernel is an independent kernel within the computation.

In some embodiments: the identifying of the kernel as a candidate for execution in the computational storage circuit includes determining that the kernel is an independent kernel; and the determining that the kernel is an independent kernel includes generating a dynamic call graph for the computation.

In some embodiments, the estimating an expected performance of the kernel in the computational storage circuit includes estimating the expected performance of the kernel in the computational storage circuit based on a bandwidth of a connection between a processing circuit of the computational storage circuit and a buffer of the computational storage circuit.

In some embodiments, the estimating an expected performance of the kernel in the computational storage circuit includes estimating the expected performance of the kernel in the computational storage circuit based on a bandwidth of a connection between a processing circuit of the computational storage circuit and persistent storage of the computational storage circuit.

In some embodiments, the estimating an expected performance of the kernel in the computational storage circuit includes estimating the expected performance of the kernel in the computational storage circuit based on a bandwidth of a connection between the computational storage circuit and a host connected to the computational storage circuit.

In some embodiments, the method further includes estimating an expected performance of the kernel in a host connected to the computational storage circuit.

According to an embodiment of the present disclosure, there is provided a system, including: a processing circuit; and memory, operatively connected to the processing circuit and storing instructions that, executed by the processing circuit, cause the system to perform a method, the method including: identifying a kernel of a computation as a candidate for execution in a computational storage circuit; and evaluating the kernel as a candidate for execution in the computational storage circuit, the identifying including estimating a working set size of the kernel, and the evaluating including estimating an expected performance of the kernel in the computational storage circuit.

In some embodiments, the estimating of the working set size of the kernel includes: performing a first test execution with a first quantity of available memory, and performing a second test execution with a second quantity of available memory, less than the first quantity.

In some embodiments, the estimating of the working set size of the kernel includes: performing a first test execution with a first quantity of available memory, and measuring execution performance of the first test execution.

In some embodiments, the identifying of the kernel as a candidate for execution in the computational storage circuit includes determining that the working set size of the kernel is less than a size of a buffer of the computational storage circuit.

In some embodiments, the identifying of the kernel as a candidate for execution in the computational storage circuit includes determining that the kernel is an independent kernel within the computation.

In some embodiments: the identifying of the kernel as a candidate for execution in the computational storage circuit includes determining that the kernel is an independent kernel; and the determining that the kernel is an independent kernel includes generating a dynamic call graph for the computation.

In some embodiments, the estimating an expected performance of the kernel in the computational storage circuit includes estimating the expected performance of the kernel in the computational storage circuit based on a bandwidth of a connection between a processing circuit of the computational storage circuit and a buffer of the computational storage circuit.

In some embodiments, the estimating an expected performance of the kernel in the computational storage circuit includes estimating the expected performance of the kernel in the computational storage circuit based on a bandwidth of a connection between a processing circuit of the computational storage circuit and persistent storage of the computational storage circuit.

In some embodiments, the estimating an expected performance of the kernel in the computational storage circuit includes estimating the expected performance of the kernel in the computational storage circuit based on a bandwidth of a connection between the computational storage circuit and a host connected to the computational storage circuit.

According to an embodiment of the present disclosure, there is provided a system, including: means for processing; and memory, operatively connected to the means for processing and storing instructions that, executed by the means for processing, cause the system to perform a method, the method including: identifying a kernel of a computation as a candidate for execution in a computational storage circuit; and evaluating the kernel as a candidate for execution in the computational storage circuit, the identifying including estimating a working set size of the kernel, and the evaluating including estimating an expected performance of the kernel in the computational storage circuit.

## BRIEF DESCRIPTION OF THE DRAWINGS

These and other features and advantages of the present disclosure will be appreciated and understood with reference to the specification, claims, and appended drawings wherein:

FIG. 1 is a system level block diagram, according to an embodiment of the present disclosure;
FIG. 2A is a block diagram showing a working set that is larger than a buffer of a computational storage device, according to an embodiment of the present disclosure;
FIG. 2B is a block diagram showing a working set that is smaller than a buffer of a computational storage device, according to an embodiment of the present disclosure;
FIG. 3A is a flowchart of a method, according to an embodiment of the present disclosure; and
FIG. 3B is a dependency graph, according to an embodiment of the present disclosure.

## DETAILED DESCRIPTION

The detailed description set forth below in connection with the appended drawings is intended as a description of exemplary embodiments of a system and method for managing computational storage provided in accordance with the present disclosure and is not intended to represent the only forms in which the present disclosure may be constructed or utilized. The description sets forth the features of the present disclosure in connection with the illustrated embodiments. It is to be understood, however, that the same or equivalent functions and structures may be accomplished by different embodiments that are also intended to be encompassed within the scope of the disclosure. As denoted elsewhere herein, like element numbers are intended to indicate like elements or features.

A computational storage device may include, for example, persistent storage (e.g., flash memory), and computational resources, such as an application specific integrated circuit (ASIC) or a field programmable gate array (FPGA). In operation, a host connected to the computational storage device may offload, or delegate, one or more portions of a computation to the computational storage device. The computational storage device may then perform the one or more portions of the computation delegated to it. In performing the one or more portions of the computation delegated to it, the computational storage device may fetch data from the persistent storage, process the data to produce one or more results, and return the one or more results to the host or save the one or more results in the persistent storage. In performing the one or more portions of the computation delegated to it, the computational storage device may also temporarily save intermediate results in a buffer of the computational storage device. The buffer may include or consist of volatile memory, which may have lower latency and higher throughput than the persistent storage, and which may therefore be better suited to the temporary storage of data that will be repeatedly used during the performance of the one or more portions of the computation delegated to the computational storage device.

The allocation of portions of the computation to the host and to the computational storage device respectively may affect the performance of the system. Such portions may be referred to as kernels. For example, if the size of the working set of a kernel (which may be referred to as the working set size) is too great to fit into the buffer of the computational storage device, then the performance of the computational storage device, in executing the kernel, may be diminished by the need to retrieve, on occasion or frequently, data from persistent storage.

As such, a method for finding kernels suitable for execution in the computational storage device may proceed as follows. A dynamic call graph of the computation may be formed by a suitable monitoring tool, while the computation is performed on a host (e.g., on the host connected to the computational storage device, or on another host). A leaf node of the call graph may then be selected as a starting point for a tentative candidate kernel. The working set size of this tentative candidate kernel may be measured or estimated by executing the tentative candidate kernel on the host, with different amounts of available memory, and monitoring its performance as a function of the available memory). If the working set size is greater than the size of the buffer, the tentative candidate kernel may be disqualified as a candidate for execution in the computational storage device. Otherwise, functions that are connected to the tentative candidate kernel may be added to the tentative candidate kernel until the working set size exceeds the size of the buffer; once this occurs the last function added to the tentative candidate kernel may be removed from the tentative candidate kernel, so that the remaining tentative candidate kernel has a working set size that is smaller than the buffer.

This tentative candidate kernel may be checked for dependencies (e.g., it may be determined whether the tentative candidate kernel waits on, or uses input from, any function that is not part of the kernel; if any are found, then the tentative candidate kernel may be disqualified as a candidate for execution in the computational storage device. If the tentative candidate kernel is not disqualified, it may be considered a candidate kernel.

The candidate kernel may then be evaluated as a candidate for execution in the computational storage device. This evaluation may include estimating the performance improvement expected if the candidate kernel is executed in the computational storage device instead of being executed in the host. An expected performance of the kernel when executed in the computational storage device may be calculated based on the peak compute performance of the computational storage device, which may be a measure of the number of (e.g., floating-point or integer) operations it is capable of performing per unit time (e.g., per second). The expected performance may also be based on the operational intensity of the kernel (the number of (e.g., floating-point or integer) operations performed per unit of data processed (which may be measured, for example, in units of floating-point operations (FLOPS) per byte processed)) and on the respective bandwidths of several connections that the computational storage device may use to receive or retrieve data for processing, and to save or deliver data resulting from such processing. These connections may include (i) the connection between the host and the computational storage device, (ii) the connection between the processing circuit of the computational storage device and the buffer of the computational storage device, and (iii) the connection between the processing circuit of the computational storage device and the persistent storage of the computational storage device. In some embodiments, the expected performance of the computational storage device may be calculated using an equation that finds the minimum of (i) a bandwidth-limited term and (ii) a computation-limited term. The bandwidth limited term may be proportional to the product of the operational intensity and the minimum of (i) the bandwidth of the connection between the host and the computational storage device, (ii) the bandwidth of the connection between the processing circuit of the computational storage device and the buffer of the computational storage device, and (iii) the bandwidth of the connection between the processing circuit of the computational storage device and the persistent storage of the computational storage device. The computation-limited term may be proportional to the peak compute performance of the processing circuit 130 of the computational storage device 125.

An expected performance of the kernel when executed in the host may be calculated in an analogous manner (using the peak compute performance of one or more processing circuits of the host 105 that may be used to execute the kernel (e.g., the central processing unit 110 of the host, or other processing circuits such as a graphics processing unit (GPU)), and using the bandwidths of one or more connections to the one or more processing circuits), or measured, by performing the execution of the candidate kernel in the host. Finally, the candidate kernel may be scheduled for execution in the computational storage device if the performance improvement expected as a result is sufficiently great (e.g., greater than a factor of 2).

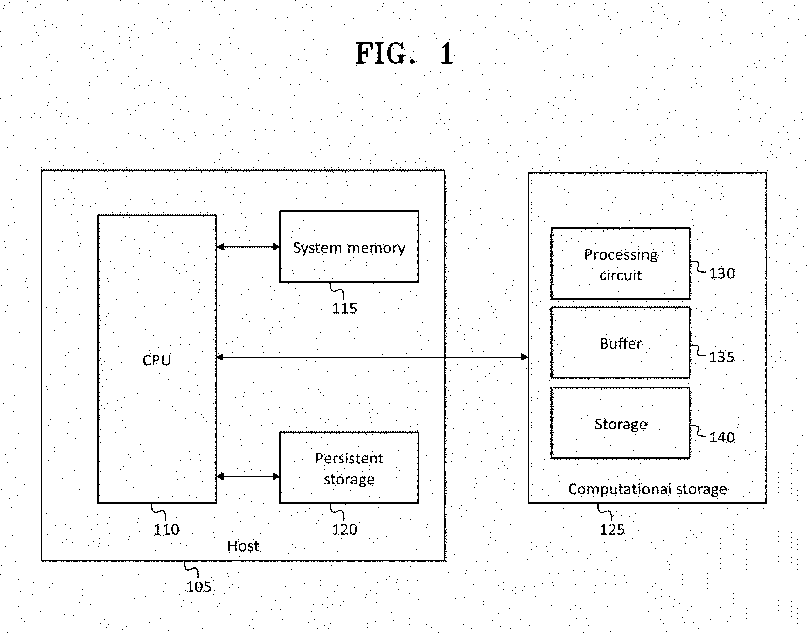

FIG. 1 is a block diagram of a portion of a computing system, in some embodiments. The computing system may include a host 105 including a central processing unit (CPU) 110, a system memory 115 (which may be or include dynamic random-access memory (DRAM)), and persistent storage 120 (which may be a solid-state drive (SSD)). The host 105 may also be connected to (or, in some embodiments, include) one or more computational storage devices 125, which may include a processing circuit 130 (e.g., a field programmable gate array (FPGA)), and a buffer (e.g., a dynamic random-access memory (DRAM) buffer) 135, and storage (e.g., persistent storage) 140, connected to the processing circuit 130. In some embodiments, the host 105 employs the storage 140 of the computational storage device 125 as persistent storage (e.g., for storing the operating system and applications that may run on the host 105); in such an embodiment the additional persistent storage 120 of the host, illustrated in FIG. 1, may be absent. In some embodiments, the storage 140 of the computational storage device 125 is not persistent storage, but is instead volatile storage (e.g., dynamic random-access memory). In some embodiments, the buffer 135 of the computational storage device 125 is absent. In some embodiments, the storage 140 of the computational storage device 125 is absent. The terminology used herein treats the computational storage device 125 as a component that is separate from, and connected to, the host 105 (although it may share an enclosure with the host 105).

Near data processing (NDP) promises several benefits such as reduced data movement, reduced energy consumption, and higher input-output (IO) bandwidth. Near data processing may be implemented, for example, using a computational storage (CS) device (or "computational storage circuit") such as a solid-state drive (SSD) including one or more processing circuits (e. g., a field programmable gate array (FPGA)) for performing computations. In such a system, when a computation (which may be referred to as a "program") is to be performed (e.g., when a program is to be executed), a portion of the computation may be executed in the computational storage device 125, and the remainder of the computation may be executed in the host 105. To make use of a computational storage device, a decision may be made (e.g., at design time, or at run time) to perform certain computational tasks (which may be referred to as "kernels") in the computational storage device 125 instead of in the host 105. Such a decision may be made by assessing a measure of performance for (i) a situation in which the kernel is executed in the computational storage device 125 and for (ii) a situation in which the kernel is executed in the host 105.

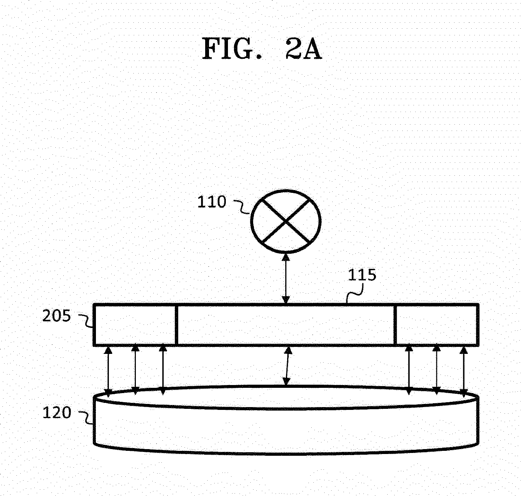

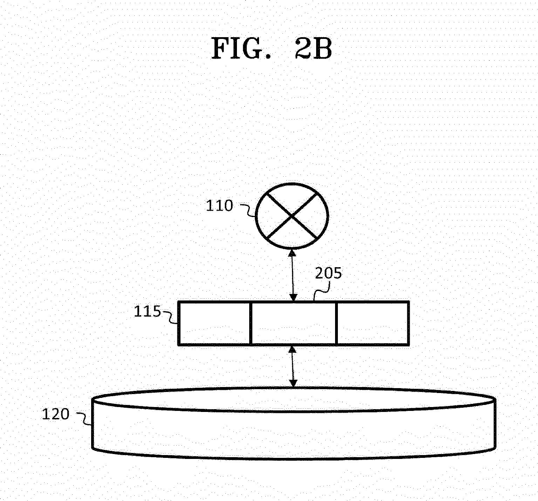

One factor that may be taken into account in determining whether a kernel will exhibit better performance if executed in the host or in the computational storage device 125 is the working set size of the kernel. The working set size is the size of the data set that the kernel accesses repeatedly during execution. As used herein, a "kernel" is a set of instructions. FIG. 2A shows a situation in which the size of the working set 205 exceeds the size of the system memory 115. During the calculation, pages are repeated swapped between the system memory 115 and the persistent storage 120, resulting in a degradation in performance. In FIG. 2B, the size of the working set 205 is less than the size of the system memory 115. During the calculation, there is no need to swap pages between the system memory 115 and the persistent storage 120; as a result the performance of the system may be better in the situation of FIG. 2B than in the situation of FIG. 2A.

As such, it may be expected that if the working set size exceeds the size of the buffer 135, the performance of the computational storage device 125 may be inferior to the performance of the computational storage device 125 that may be expected, for the kernel, if the size of the buffer 135 exceeds the working set size, because, for example, the buffer 135 may have significantly better performance (measured, e.g., in terms of latency and throughput) than the storage 140 of the computational storage device 125. As mentioned above, when the computational storage device 125 executes a kernel with a working set size exceeding the size of the buffer 135 the computational storage device 125 may, temporarily and repeatedly, store data, of the of the data set that the kernel accesses repeatedly during execution, in the storage 140 of the computational storage device 125, resulting in delays due to the latency and throughput of the storage 140 of the computational storage device 125, which may be higher, and lower, respectively, than those of the buffer 135 of the computational storage device 125.

As such, in some embodiments, a dynamic call graph of the computation (e.g., of the instructions to be performed) may be generated and used to measure or estimate the working set size for each of a plurality of tentative candidate kernels, each of the tentative candidate kernels being a kernel, that, if it meets certain criteria, may become a candidate for execution in the computational storage device 125 (instead of in the host 105). The dynamic call graph for a program or for a portion of a program may be a graph in which nodes are functions and edges are function calls.

An iterative analysis of the call graph may be performed starting from a leaf node. The working set size of the leaf node may be measured or estimated (as discussed in further detail below) for the leaf node (based on the assumption that the leaf node may be the kernel that is to be executed in the computational storage device 125), and, if the working set size is less than the size of the buffer 135, additional nodes (e.g., functions) may be added to the kernel, one at a time, and, after each such addition, the working set size of the kernel consisting of the leaf node and all added nodes may be measured or estimated. Once a kernel has been found to have a working set size exceeding the size of the buffer 135, the most recently added node may be removed. In some embodiments, the kernel that results from the removal of the most recently added node is treated as a tentative candidate kernel; in other embodiments other nodes are tested as alternatives to the most recently added node, and if any are found that, when added to the kernel, result in kernel having a working set size less than the size of the buffer 135, the process is continued until no node directly connected to the kernel can be added to the kernel without increasing its working set size beyond the size of the buffer 135.

A determination may then be made regarding whether the tentative candidate kernel depends on any functions that are not part of the kernel. As used herein, a kernel depends on a function if, during execution, it waits on, or depends on, the output of the function. A kernel that does not depend on any function that is not in the kernel may be referred to herein as an "independent" kernel. Any function upon which the kernel depends may be added to the kernel before the working set size is measured or estimated. This approach may be used because executing the kernel in the computational storage device 125 while executing a function upon which it depends in the host 105 may be expected to result in relatively poor performance.

The candidate kernel may then be evaluated as a candidate for execution in the computational storage device 125. This evaluation may include estimating the expected performance if the kernel is executed in the host 105, and estimating the expected performance if the kernel is executed in the processing circuit 130 of the computational storage device 125. Kernels may then be selected for execution in the processing circuit 130 of the computational storage device 125 based on the performance improvement that is expected to result from such execution. For example, if the performance improvement exceeds a threshold (e.g., the performance improvement is greater than a factor of 2), then the kernel may be scheduled (e.g., in the source code for the program) for execution in the computational storage device 125.

The estimation of the working set size may be performed in several ways. For example, the tentative candidate kernel may be executed in the host 105 and the performance (perf) profiling tool in Linux may be employed to record the following events: (i) CPU-clock (which may record the number of CPU clock cycles), (ii) last level cache load (llc-load) (which may record the number of load operations, (iii) last level cache store (llc-store) (which may record the number of store operations, (iv) the number of cache misses, and (v) paging operations, in which the CPU fetches data from the persistent storage 120 because it has been paged out of the system memory 115. This testing may be repeated with different amounts of the system memory 115 made available to the computation (e.g., using the Linux control groups (cgroups) feature).

The computation performed by the tentative candidate kernel is repeated, and each time the amount of system memory 115 available to the computation is set to a different value, as mentioned above. The amount of memory at which overhead (e.g., from swapping memory in and out of the persistent storage 120) becomes significant may then be used as an estimate of the working set size.

In another example of a method for estimating of the working set size, the Intel™ pin tool (which may be a dynamic binary instrumentation framework) may be employed to collect memory access traces of the execution of a tentative candidate kernel. The reuse distance and average stride distance at page granularity may then be calculated. For example, access patterns (stride accesses) may be analyzed to observe regular strides.

The reuse distance may be a metric for temporal locality. To estimate the reuse distance, the number of unique page accesses between repeating page accesses may be calculated. A high reuse distance may be an indication of poor temporal locality, and low reuse distance may be an indicator of good temporal locality.

The average stride distance may be a metric for spatial locality. To estimate the average stride distance, the change between two consecutive data accesses may be calculated, and divided by the total number of data accesses. If the stride distance exceeds the size of the buffer 135, the offloaded kernel may be required to fetch data from storage, facing a data access penalty and slowing execution of the kernel.

These measures (the reuse distance and the average stride distance) may be combined to estimate the working set size of a kernel; for example, the working set size may be estimated as the largest of (i) the reuse distance, (ii) the average stride distance, and (iii) the greatest stride distance if the kernel has irregular strides.

The expected performance of the kernel, if executed in the computational storage device 125 may then be estimated using the following equation:

$$\text{Performance (Ops/Sec)} = \min(\min(\text{OI} \times \text{DRAM BW}, \text{OI} \times \text{IO Interconnect BW}, \text{OI} \times \text{Storage BW}), \text{Peak Compute Performance}) \qquad (1)$$

where OI is the operational intensity, defined as the number of arithmetic operations performed per byte of data processed. The operational intensity may be estimated using the following equations:

$$\text{Total OPs Execution} = ((\text{instructions} - (\text{branches} + \text{L1-dcache-loads} + \text{L1-dcache-stores})) \qquad (2)$$

$$\text{Data Access from memory} = (\text{llc-misses}) \qquad (3)$$

$$\text{Operational Intensity} = \text{Total OPs Executed} / \text{Data Accesses from Memory}$$

$$(4)$$

In Equation 1, the DRAM BW is the access bandwidth (BW) of the buffer 135 for the processing circuit 130, the IO interconnect BW is the bandwidth of the connection (e.g., the PCIe connection) between the host and the computational storage device 125, and the storage BW is the bandwidth of the storage 140 of the computational storage device 125 for the processing circuit 130 of the computational storage device 125.

The total number of kernel instances that can be instantiated on the target platform may depend on the hardware resources available at the target platform. For a computational storage device 125 in which the processing circuit 130 includes one or more field programmable gate arrays (FPGAs), the kernel parallelism may be calculated using Equation 5 below.

$$\text{Total number of Kernel Instances} = \frac{\text{Total FPGA Resources Available for Use}}{\text{FPGA Resources required for 1 kernel}}$$

$$(5)$$

The selectivity of a kernel may be defined as the ratio of the input data size to the output data size of the kernel. The higher the selectivity of a kernel, the better suited it may be to execution in the computational storage device 125. The selectivity may be useful to show how offloading kernel can improve effective bandwidth of the input-output (IO) Interconnect between the host 105 and computational storage device 125. Higher selectivity may mean higher effective utilization of the IO interconnect bandwidth. For example, if the selectivity is 1 (and if the results of the computation, if performed in the computational storage device 125, are returned to the host 105 (as opposed to, e.g., being stored in the storage 140 of the computational storage device 125)), then the IO interconnect between the host 105 and the computational storage device 125 may eventually become a bottleneck as an amount of data equal to the amount of data processed by the computational storage device 125 is sent back to the host 105; if the selectivity is 2, then only half as much data as was processed by the computational storage device 125 is sent back, improving data reduction and the effective bandwidth of the IO interconnect between the host 105 and the computational storage device 125.

In some embodiments, the input-output (IO) bandwidth is benchmarked considering the input-output access pattern of the kernel. For example, for a streaming IO access pattern, sequential IO bandwidth can be considered while calculating peak IO bandwidth. In some embodiments, a correction to the calculated IO bandwidth is made to account for a loss of bandwidth resulting from an IO request size, generated by the kernel, that is different from the access granularity (e.g., the page size of the storage 140 of the computational storage device 125).

The peak compute performance of the processing circuit 130 of the computational storage device 125 may be calculated or estimated, for example, using high level synthesis (HLS) tools with a suitable test bench. As an alternative, the following equation (Equation 6) may be used to estimate the peak compute performance of the processing circuit 130 (which may be a field programmable gate array (FPGA)) of the computational storage device 125.

$$\text{FPGA Kernel Performance} = \text{Number of Operations per Kernel} \times$$

$$\text{Total Number of kernel Instances} \times \text{Execution Frequency of kernel} \qquad (6)$$

To scale the performance analysis to a number of target devices (e.g., N target devices), the Peak Compute Performance of Equation 1 above may be calculated as N times the Peak Compute Performance of a single target device.

The expected performance of the kernel, if executed in the host 105, may be estimated using the following equation, after performing a test execution of the kernel on the host:

$$\text{Host Performance(OPs/Sec)} = ((\text{instructions} - (\text{branches} + \text{L1-dcache-loads} +$$

$$\text{L1-dcache-stores})) / \text{Execution Time}) \qquad (7)$$

where the variable instructions is the number of instructions executed during the test execution, the variable branches is the number of branch instructions executed during the test execution, L1-dcache-loads is the number of L1 cache load instructions executed during the test execution, and L1-dcache-stores is the number of L1 cache store instructions executed during the test execution. As such, in this equation, the term (instructions - (branches + L1-dcache-loads + L1-dcache-stores)) counts the number of instructions that perform arithmetic operations.

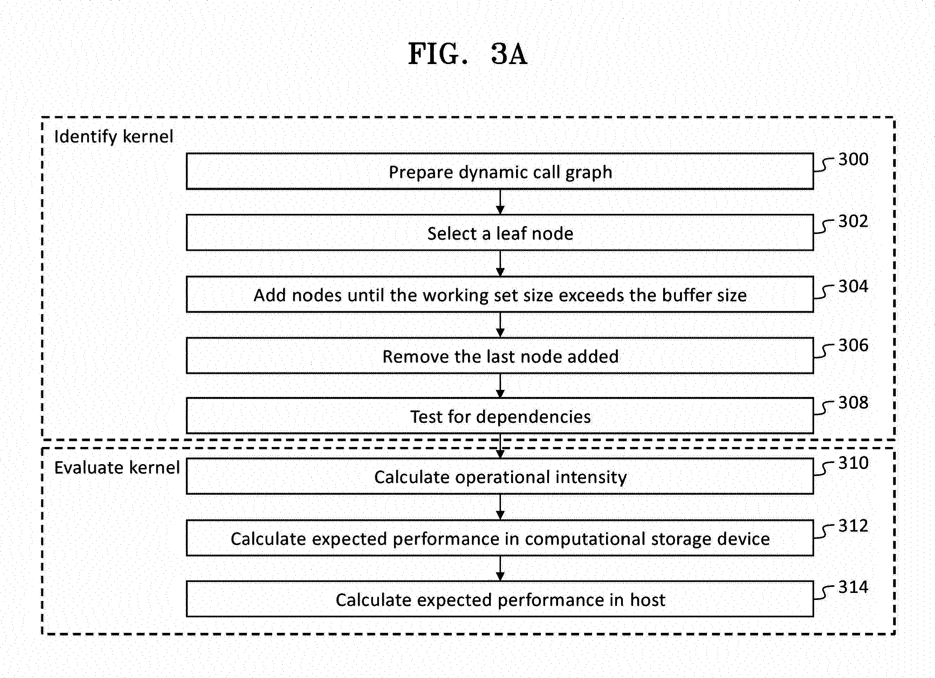

FIG. 3A is a flowchart of a method for identifying a candidate kernel and evaluating the candidate kernel. The method includes identifying a kernel of a computation as a candidate for execution in a computational storage circuit; and evaluating the kernel as a candidate for execution in the computational storage circuit. The identifying includes preparing, at 300, a dynamic call graph of the computation, and selecting, at 302, a leaf node. The identifying further includes adding nodes, at 304, until the working set size exceeds the buffer size, then removing, at 306, the last node added, and testing for dependencies, at 308, to generate a candidate kernel. The evaluating includes calculating, at 310, the operational intensity of the candidate kernel, calculating, at 312, the expected performance of the kernel if executed in the computational storage device 125, and calculating, at 314, the expected performance of the kernel if executed in the host 105.

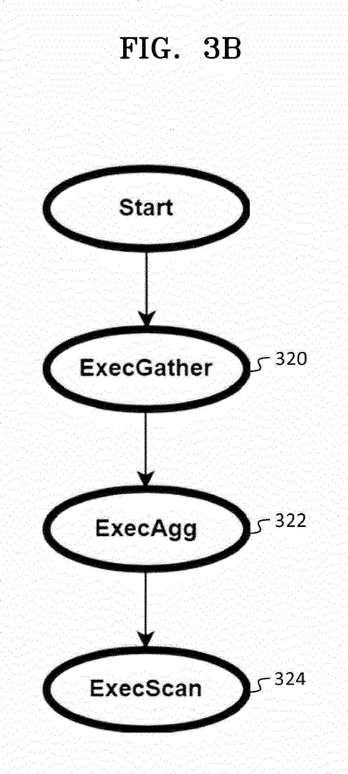

FIG. 3B is a dependency graph of an example computation, used to demonstrate some embodiments. The PostgreSQL-13 and Query 6 of the Transaction Processing Performance Council Benchmark H (TPC-H benchmark) (a decision support benchmark that measures the performance of a computer system in processing complex ad-hoc queries and data warehouse applications) and TPC-H database were used, with a scale factor of 100. Query 6 was executed on a host 105 and a dynamic call graph of the query execution was captured. Utilizing this dynamic call graph kernels were identified as tentative candidate kernels and their dependencies were analyzed. These dependencies are shown in FIG. 3B. The approximate methodology was used (executing the query in high and low memory settings) to identify the working set size. A measurement was not performed as such a measurement would entail the execution of kernels independently, which was not readily possible. From this analysis, ExecGather (a kernel for performing a gather operation) was determined to have a working set size larger than the buffer 135 of the computational storage device 125, and each of ExecAgg (a kernel for performing an aggregation operation) and ExecScan (a kernel for performing a scan operation) was determined to have a working set size smaller than the buffer 135 of the computational storage device 125. As such, the combination of ExecAgg and ExecScan was used as the candidate kernel.

The table below shows parameter values used for calculating performance estimates.

| Features | Values |
|---|---|
| Operational Intensity | 5.15 FLOPS/byte |
| Peak Compute Performance (Target Compute) | 28 GOPS/Sec |
| DRAM Bandwidth | 20 GB/Sec |
| IO Interconnect Bandwidth (PCIe) | 8 GB/Sec |
| Storage Bandwidth | 4 GB/Sec |

Equation 1 above was used to estimate the performance of the kernel if executed in the computational storage device 125. The operational intensity shown in the table above represents the operational intensity of the kernel (e.g., of ExecAgg and ExecScan together). This value was calculated using Equation 4 above. All the parameters needed for Equation 4 may be obtained using performance counters represented in Equation 2 above and Equation 3 above. These values are obtained by executing the query on the host system and collecting values for required performance counters.

The maximum estimated performance for offloaded kernels (ExecAgg and ExecScan) when executed in the computational storage device 125 is 20.6 giga operations per second (GOPs/Sec), calculated as follows:

$$\text{OPs/Sec} = \min(28 \text{ GOPs/Sec}, 5.15 \times 20 \text{ gigabytes per second (GB/Sec)}, 5.15 \times 8 \text{ GB/Sec}, 5.15 \times 4 \text{ GB/Sec})$$
$$= 20.6 \text{ GOPs/Sec}$$

The above equation is derived from Equation 1 (by merging the min functions and re-ordering the terms).

The expected performance of 20.6 GOPs/Sec is significantly higher than the host kernel performance of 3.14G OPs/S (calculated using Equation 7 above). The main speed-up is due to faster computing on the computational storage device 125. The estimated performance may vary if the offloaded kernel cannot be implemented with such performance characteristics.

As used herein, a "function" is a set of instructions that may be called by another function or by a main program. As such, the term "function" encompasses a set of instructions that in the syntax of source code from which the set of instructions may be compiled may instead be referred to as a "subroutine".

As used herein, "a portion of" something means "at least some of" the thing, and as such may mean less than all of, or all of, the thing. As such, "a portion of" a thing includes the entire thing as a special case, i.e., the entire thing is an example of a portion of the thing. As used herein, when a second quantity is "within Y" of a first quantity X, it means that the second quantity is at least X-Y and the second quantity is at most X+Y. As used herein, when a second number is "within Y%" of a first number, it means that the second number is at least (1-Y/100) times the first number and the second number is at most (1+Y/100) times the first number. As used herein, the term "or" should be interpreted as "and/or", such that, for example, "A or B" means any one of "A" or "B" or "A and B".

The background provided in the Background section of the present disclosure section is included only to set context, and the content of this section is not admitted to be prior art. Any of the components or any combination of the components described (e.g., in any system diagrams included herein) may be used to perform one or more of the operations of any flow chart included herein. Further, (i) the operations are example operations, and may involve various additional steps not explicitly covered, and (ii) the temporal order of the operations may be varied.

Each of the terms "processing circuit" and "means for processing" is used herein to mean any combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

As used herein, when a method (e.g., an adjustment) or a first quantity (e.g., a first variable) is referred to as being "based on" a second quantity (e.g., a second variable) it means that the second quantity is an input to the method or influences the first quantity, e.g., the second quantity may be an input (e.g., the only input, or one of several inputs) to a function that calculates the first quantity, or the first quantity may be equal to the second quantity, or the first quantity may be the same as (e.g., stored at the same location or locations in memory as) the second quantity.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the spirit and scope of the inventive concept.

The terminology used herein is for the purpose of describing particular embodiments only and is not intended to be limiting of the inventive concept. As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

It will be understood that when an element or layer is referred to as being "on", "connected to", "coupled to", or "adjacent to" another element or layer, it may be directly on, connected to, coupled to, or adjacent to the other element or layer, or one or more intervening elements or layers may be present. In contrast, when an element or layer is referred to as being "directly on", "directly connected to", "directly coupled to", or "immediately adjacent to" another element or layer, there are no intervening elements or layers present.

Any numerical range recited herein is intended to include all sub-ranges of the same numerical precision subsumed within the recited range. For example, a range of "1.0 to 10.0" or "between 1.0 and 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Similarly, a range described as "within 35% of 10" is intended to include all subranges between (and including) the recited minimum value of 6.5 (i.e., (1 -35/100) times 10) and the recited maximum value of 13.5 (i.e., (1 + 35/100) times 10), that is, having a minimum value equal to or greater than 6.5 and a maximum value equal to or less than 13.5, such as, for example, 7.4 to 10.6. Any maximum numerical limitation recited herein is intended to include all lower numerical limitations subsumed therein and any minimum numerical limitation recited in this specification is intended to include all higher numerical limitations subsumed therein.

Although exemplary embodiments of a system and method for managing computational storage have been specifically described and illustrated herein, many modifications and variations will be apparent to those skilled in the art. Accordingly, it is to be understood that a system and method for managing computational storage constructed according to principles of this disclosure may be embodied other than as specifically described herein. The invention is also defined in the following claims.

**Claims**

1. A method, comprising:

   identifying a kernel of a computation as a candidate for execution in a computational storage circuit (125); and
   evaluating the kernel as a candidate for execution in the computational storage circuit (125),
   the identifying comprising estimating a working set size (205) of the kernel, and
   the evaluating comprising estimating an expected performance of the kernel in the computational storage circuit (125).

2. The method of claim 1, wherein the estimating of the working set size (205) of the kernel comprises:

   performing a first test execution with a first quantity of available memory, and
   performing a second test execution with a second quantity of available memory, less than the first quantity.

3. The method of claim 1, wherein the estimating of the working set size (205) of the kernel comprises:

   performing a first test execution with a first quantity of available memory, and
   measuring execution performance of the first test execution.

4. The method of any one of claims 1 to 3, wherein the identifying of the kernel as a candidate for execution in the computational storage circuit (125) comprises determining that the working set size (205) of the kernel is less than a size of a buffer (135) of the computational storage circuit (125).

5. The method of any one of claims 1 to 4, wherein the identifying of the kernel as a candidate for execution in the computational storage circuit (125) comprises determining that the kernel is an independent kernel within the computation.

6. The method of any one of claims 1 to 4, wherein:

   the identifying of the kernel as a candidate for execution in the computational storage circuit (125) comprises determining that the kernel is an independent kernel; and
   the determining that the kernel is an independent kernel comprises generating a dynamic call graph for the computation.

7. The method of any one of claims 1 to 6, wherein the estimating an expected performance of the kernel in the computational storage circuit (125) comprises estimating the expected performance of the kernel in the computational storage circuit (125) based on a bandwidth of a connection between a processing circuit (130) of the computational storage circuit (125) and a buffer (135) of the computational storage circuit (125).

8. The method of any one of claims 1 to 7, wherein the estimating an expected performance of the kernel in the computational storage circuit (125) comprises estimating the expected performance of the kernel in the computational storage circuit (125) based on a bandwidth of a connection between a processing circuit (130) of the computational storage circuit (125) and persistent storage (140) of the computational storage circuit (125).

9. The method of any one of claims 1 to 8, wherein the estimating an expected performance of the kernel in the computational storage circuit (125) comprises estimating the expected performance of the kernel in the computational storage circuit (125) based on a bandwidth of a connection between the computational storage circuit (125) and a host (105) connected to the computational storage circuit (125).

10. The method of any one of claims 1 to 9, further comprising estimating an expected performance of the kernel in a host (105) connected to the computational storage circuit (125).

11. A system, comprising: a processing circuit; and memory, operatively connected to the processing circuit and storing instructions that, executed by the processing circuit, cause the system to perform the method according to any one of claims 1 to 10.

# FIG. 1

Host 105

CPU 110

System memory 115

Persistent storage 120

Computational storage 125

Processing circuit 130

Buffer 135

Storage 140

FIG. 2A

FIG. 2B

# FIG. 3A

EP 4 418 124 A2

**Identify kernel**

| | |
|---|---|
| Prepare dynamic call graph | 300 |
| ↓ | |
| Select a leaf node | 302 |
| ↓ | |
| Add nodes until the working set size exceeds the buffer size | 304 |
| ↓ | |
| Remove the last node added | 306 |
| ↓ | |
| Test for dependencies | 308 |

**Evaluate kernel**

| | |
|---|---|
| Calculate operational intensity | 310 |
| ↓ | |
| Calculate expected performance in computational storage device | 312 |
| ↓ | |
| Calculate expected performance in host | 314 |

# FIG. 3B